## Europäisches Patentamt
## European Patent Office
## Office européen des brevets

(19)

(11) Veröffentlichungsnummer: **0 181 500**
**B1**

(12) # EUROPÄISCHE PATENTSCHRIFT

(45) Veröffentlichungstag der Patentschrift:
**12.07.89**

(51) Int. Cl.⁴: **A 01 D 41/12**

(21) Anmeldenummer: **85112825.6**

(22) Anmeldetag: **10.10.85**

(54) **Mähdrescher.**

(30) Priorität: **15.10.84 US 660831**

(43) Veröffentlichungstag der Anmeldung:
**21.05.86 Patentblatt 86/21**

(45) Bekanntmachung des Hinweises auf die Patenterteilung:
**12.07.89 Patentblatt 89/28**

(84) Benannte Vertragsstaaten:
**BE DE FR GB IT**

(56) Entgegenhaltungen:
**US-A-754 448**
**US-A-3 370 728**
**US-A-3 450 286**
**US-A-4 441 511**

(73) Patentinhaber: **DEERE & COMPANY, 1 John Deere Road, Moline Illinois 61265 (US)**

(72) Erfinder: **Weber, Jerry Lawrence, Rural Route No. 1, Aledo Illinois 61231 (US)**
Erfinder: **Yarbrough, Don Lewis, 215 W. 13th Avenue, Coal Valley Illinois 61240 (US)**

(74) Vertreter: **Feldmann, Bernhard, DEERE & COMPANY European Office, Patent Department Steubenstrasse 36- 42 Postfach 503, D-6800 Mannheim 1 (DE)**

EP 0 181 500 B1

### Beschreibung

Die Erfindung bezieht sich auf einen Mähdrescher mit einem Hordenschüttler und einer unterhalb des Hordenschüttlers angeordneten Reinigungsvorrichtung, die das Erntegut in einen Stroh-, Kaff- und einen Getreidestrom aufteilen, wobei zumindest ein Teile des Stroh- und Kaffstroms einem am Ende des Hordenschüttlers vergesehenen pneumatischen Förderer zugeführt wird.

Dieser Mähdrescher (US-A-4 441 511) ist mit einem Gebläseförderer ausgerüstet, der das gereinigte Erntegut aufsammelt und es dem Sammelbehälter zuführt, während das in der Reinigungsvorrichtung nur teilweise gereinigte Erntegut über eine Gebläseleitung erneut der Dreschvorrichtung zugeführt wird. Die im Mähdrescher anfallenden Stroh- und Kaffanteile werden jedoch über den Hordenschüttler sowie über die Reinigungsvorrichtung getrennt abgegeben, so daß keine vollständige Vermischung von Stroh und Kaff stattfinden kann.

Ferner ist eine Strohverteilervorrichtung für Mähdrescher bekannt (US-A-3 450 286), die am Ende des Mähdreschers vorgesehen ist und die das Kaff und das Stroh mittels eines weiteren Bandförderers zugeführt bekommt und es auf dem Boden verteilt. Da der Bandförderer ansteigend verläuft, besteht die Gefahr, daß das Kaff nicht vollständig weitergeleitet wird. Die unterschiedlichen spezifischen Gewichte führen auch dazu, daß Stroh und insbesondere Kaff sich bei der Ablage nicht gleichmäßig miteinander vermischen, so daß die Gefahr besteht, daß Kaff lediglich auf der Oberfläche des Strohs abgelegt, von dem Wind weggeblasen und auf einer Stelle des Bodens angesammelt wird.

Auch ist es nicht mehr neu (US-A-754 448), bei einer Dreschmaschine einen Sammelbehälter vorzusehen, in den von der Dreschmaschine ausgedroschenes Stroh fällt und an den sich ein Rohr anschließt. An der Verbindungsstelle zuwischen Rohr und Sammelbehälter ist noch ein Rotor mit Wurfarmen vorgesehen, über den das Stroh ausgefördert wird. Kaff wird in einem Behälter aufgefangen, über ein Gebläse angesaugt und in den Sammelbehälter geblasen, so daß es mit dem Stroh vermischt durch das Rohr austreten kann. Der von dem Gebläse erzeugte Luftstrom unterstützt das Ausfördern von Stroh und Kaff. Sämtliche·im Kaff noch befindlichen Fremdkörper wie kleine Steine werden mit dem Stroh ausgefördert und können Beschädigungen an dem Gebläse und Rotor hervorrufen.

Demgegenüber liegt der Erfindung die Aufgabe zugrunde, eine Vorrichtung zu schaffen, mit der eine gleichmäßige Vermischung des aus dem Hordenschüttler und der Reinigungsvorrichtung abgegebenen Kaffs und Strohs erfolgen kann.

Diese Aufgabe ist dadurch gelöst worden, daß der Einlaßstutzen des Förderers mit seiner Einlaßöffnung mit geringen Abstand hinter einem Abgabeteil bzw. der Auslaßöffnung der Reinigungsvorrichtung und der Auslaßstutzen des Förderers mit seiner Auslaßöffnung im Bereich des Abgabeendes des Hordenschüttlers endet und der austretende Luftstrom des pneumatischen Förderers sowie der vom Hordenschüttler austretende Strohstrom einer Verteilervorrichtung, insbesondere einer Häckselvorrichtung, zugeführt wird.

Durch die Verwendung eines pneumatischen Förderers am Ende der Reinigungsvorrichtung kann insbesondere das aus der Reinigungsvorrichtung abgegebene Kaff aufgenommen werden und der Strohvertellervorrichtung zugeführt werden, der auch über den Hordenschüttler das Stroh zugeleitet wird, so daß hierdurch eine gleichmäßige Vermischung von Stroh- und Kaffanteilen erfolgt und somit eine gleichmäßigere Abgabe des Gemisches auf den Boden vorgenommen werden kann. Hierzu ist es vorteilhaft, daß der pneumatische Förderer als Gebläseförderer ausgebildet ist, der durch seine Einlaßöffnung Luft von außen ansaugt und dessen Einlaßöffnung im Bereich eines Abgabeteils bzw. der Auslaßöffnung der Reinigungsvorrichtung zur Abgabe von Kaff vorgesehen ist, so daß zumindest ein Teil des Kaffs mit der Luft angesaugt wird. Durch die vorteilhafte Anordnung der Einlaßöffnung des Gebläseforderers am hinteren Ende der Reinigungsvorrichtung wird über den Gebläseförderer das aus der Reinigungsvorrichtung austretende Kaff aufgesaugt und unmittelbar in einem Kaff-Luftstrom dem Strohstrom und somit der Strohverteilervorrichtung zugeführt, die im Bereich des Auslaßendes des Gebläseförderers vorgesehen ist. Hierzu ist es ferner vorteilhaft, daß die Auslaßöffnung der Reinigungsvorrichtung zur Abgabe des Kaffs nach hinten und die Einlaßöffnung des Gebläseförderers nach vorne und unten gerichtet ist und daß die Einlaßöffnung durch eine Stirnseite begrenzt wird, die aus einem oberen in etwa autrecht stehenden Teil und aus einem sich daran anschließenden unteren, sich nach hinten erstreckenden Teil gebildet ist. Durch die vorteilhafte Ausbildung der Einlaßöffnung, die derart ausgebildet ist, daß Kaff zum Teil von unten abgesaugt werden kann und auch zum Teil von oben eingeführt werden kann, erhält man die Gewähr, daß der überwiegende Kaffanteil vom Gebläseförderer aufgenommen und der Strohverteilervorrichtung zugeführt wird.

In weiterer Ausgestaltung der Erfindung ist es vorteilhaft, daß die Einlaßöffnung des Gebläseförderers durch eine Stirnseite begrenzt wird, die aus einem oberen nach hinten ansteigenden Teil und einem sich daran anschließenden, sich nach unten und hinten erstreckenden, geneigt verlaufenden unteren Teil gebildet ist. Um das Kaff dem Gebläseförderer etwas komprimierter zuzuführen und somit Verluste zwischen der Abgabeseite der Reinigungsvorrichtung und der Aufnahmeseite des Gebläseförderers zu vermeiden, ist es vorteilhaft, daß der Kaffzuführteil zur Aufnahme und Weiterleitung des Kaffs einen nach hinten zusammenlaufenden Boden aufweist, der durch die Auslaßöffnung begrenzt wird, die wesentlich schmaler als die Breite des Mähdreschergehäuses ist. Hierzu ist es ferner vorteilhaft, daß der Boden zur Aufnahme und zur Zusammenführung des Kaffs durch nach hinten zusammenlaufende Selten begrenzt ist und daß im Bereich des hinteren Endes der Reinigungsvorrichtung der Boden zur Aufnahme des Kaffs vorgesehen ist und die Einlaßöffnung des Gebläseförderers hinter und etwas oberhalb des stromabwärts liegenden Endes des Bodens angeordnet ist.

Eine kostengünstige Aufhängung des Bodens des Kaffzuführteiles sowie der Siebe erhält man dadurch, daß der Boden und die Siebe der Reinigungsvorrichtung an Lenkern gemeinsam schwingend gelagert sind und daß der Boden zur Aufnahme und zur Zusammenführung des Kaffs zumindest teilweise von dem Gebläseförderer getragen wird.

In weiterer Ausgestaltung der Erfindung ist es vorteilhaft, daß der Auslaßstutzen des Gebläseförderers sich nach oben erstreckt und an eine in etwa aufrecht stehende, quer verlaufende Wand angeschlossen ist, die zwischen den Seitenwänden des Mähdreschers vorgesehen ist, und daß der Gebläseförderer einen Auslaßkrümmer aufweist, der sich nach unten und durch die quer verlaufende Wand erstreckt, wobei das Abgabeende des Hordenschüttlers oberhalb und im Bereich der Auslaßöffnung des Gebläseförderers enden kann. Da das Auslaßende des Hordenschüttlers sowie die Auslaßöffnungen des Gebläseförderers in etwa auf der gleichen Querebene enden, wird eine gute Vermischung des aus dem Gebläseförderer abgegebenen Kaffs und des aus dem Hordenschüttler abgegebenen Strohs gewährleistet, das dann als gemeinsamer Gutstrom der Strohverteilervorrichtung zugeführt wird, so daß eine einwandfreie Vermischung der beiden Gutbestandteile gewährleistet ist. Die gemeinsame Aufnahme von Stroh und Kaff aus der Reinigungsvorrichtung bzw. Zum Teil auch aus dem Hordenschüttler wird durch die vorteilhaft ausgerichtete Einlaßöffnung des Einlaßstutzens des Gebläseförderers gewährleistet. Da das Abgabeende des Hordenschüttlers in vorteilhafter Weise oberhalb des Gebläseförderers liegt, können die spezifischen schwereren Strohteile von oben her in den Kaffstrom eindringen und sich besser mit diesem vermischen.

In weiterer Ausgestaltung der Erfindung ist es vorteilhaft, daß der Gebläseförderer zumindest ein Gebläserad aufweist, das derart angeordnet ist, daß das aus der Auslaßöffnung der Reinigungsvorrichtung abgegebene Kaff und/oder Stroh von dem Gebläserad gemeinsam aufgenommen und der Strohverteilervorrichtung zugeführt wird, daß die Strohverteilervorrichtung zahlreiche Schlegel oder Schneidwerksorgane aufweist, die das Stroh und das Kaff aufnehmen, vermischen und verteilen, und daß die Strohverteilervorrichtung eine quer zur Arbeitsrichtung des Mähdreschers verlaufende Achse aufweist. Vorteilhaft ist es ferner, daß das Gebläserad eine quer zur Arbeitsrichtung des Mähdreschers verlaufende Achse aufweist und daß die Einlaßöffnung des Gebläseförderers mit Abstand zum hinteren Ende von Sieben der Reinigungsvorrichtung angeordnet ist und daß der Kaffzuführteil mit einem Boden zwischen den Sieben und der Einlaßöffnung zur Aufnahme mindestens eines Teils des Kaffs vorgesehen ist, das zu dem Gebläseförderer weitergeleitet wird.

Im folgenden wird die Erfindung anhand von mehrere Ausführungswege darstellenden Zeichnungen näher erläutert. Es zeigt:

Fig. 1 das hintere Ende eines Mähdreschers in Seitenansicht,

Fig. 2 eine Tragvorrichtung für das Austragende eines Spreubodens,

Fig. 3 eine Ansicht entlang der Linie 3 - 3 gemäß Fig. 1 sowie eine detaillierte Darstellung eines pneumatischen Förderers bzw. Gebläses,

Fig. 4 eine Ansicht entlang der Linie 4 - 4 gemäß Fig. 1 mit dem Reinigungsschuh, dem Gebläseförderer sowie dem Spreuboden,

Fig. 5 eine Schnittdarstellung entlang der Linie 5 - 5 gemäß Fig. 4,

Fig. 6 eine ähnliche Ansicht wie in Fig. 2, jedoch mit einer anders ausgebildeten Abdeckvorrichtung für den Gebläseförderer,

Fig. 7 eine Teilansicht gemäß Fig. 3 mit einer weiteren Abdeckvorrichtung.

In der Zeichnung ist mit 10 der hintere Teil eines in der Zeichnung nicht weiter dargestellten Mähdreschers bezeichnet, der sich auf hinteren steuerbaren Laufrädern 12 und vorderen nicht dargestellten antreibbaren Laufrädern abstützt. Der Mähdrescher 10 weist ferner einen Hordenschüttler 14 sowie eine Reinigungsvorrichtung 16 auf. Unterhalb des Hordenschüttlers 14 befindet sich ein Rücklaufboden 18, der das aus dem Hordenschüttler ausgeschiedene Erntegut sowie andere Kaffteile aufnimmt, die dann der Reinigungsvorrichtung 16 zugeführt werden. Die Reinigungsvorrichtung ist mittels Lenkern 20 schwingend gelagert. Zur Reinigungsvorrichtung 16 gehören ein oberes Kaffsieb 22 sowie ein unteres Sieb 24, die in einem Rahmen 26 angeordnet sind. Die übrigen Teile des Mähdreschers mit Ausnahme der Achsanordnung 28 sind in der Zeichnung nicht dargestellt. Der Mähdrescher 10 ist an seinem hinteren Ende mit einer nach unten offenen Haube 30 ausgerüstet, die aus einem Oberteil 32, einer Rückwand 34 sowie linken und rechten Seitenwänden 36 und 38 gebildet ist. Der hintere Teil der Haube 30 deckt das hintere Ende des Hordenschüttlers 14 sowie einen Teil der Reinigungsvorrichtung 16 ab.

Ferner deckt die Haube 30 eine quer zur Bewegungsrichtung des Mähdreschers verlaufende Häckselvorrichtung 40 ab, zu der eine sich ebenfalls quer zur Bewegungsrichtung des Mähdreschers erstreckende Häckseltrommel 42 gehört, die auf einer Achse 44 angeordnet ist. Die Häckseltrommel 42 ist mit zahlreichen sich radial erstreckenden Schneidwerksorganen bzw. Schlegeln 46 ausgerüstet. Die horizontal und quer verlaufende Häckseltrommel 42 befindet sich in einem Häckselgehäuse 48 an der hinteren, unteren Seite der Haube 30. Das Häckselgehäuse 48 ist nach oben offen, so daß sich die Schlegel 46 bis in die Einlaßöffnung 50 des Häckselgehäuses 48 erstrecken. Die Einlaßöffnung 50 steht mit der Auslaßöffnung der Haube 30 in Verbindung, die durch die Rückwand 34 sowie die Seitenwände 36 und 38 gebildet ist. Das vordere Ende der Auslaßöffnung der Haube 30 wird durch eine quer verlaufende Stirnwand 52 begrenzt, die sich quer über die gesamte Breite der Haube 30 erstreckt. Die Stirnwand 52 kann mit den Seitenwänden 36 und 38 lösbar verbunden sein, wenn zu den einzelnen Teilen ein besserer Zugang ermöglicht werden soll. Die stirnwand 52 ist derart in der Haube 30 angeordnet, daß das von dem Hordenschüttler 14 abgegebene Erntegut über die stirnwand nach unten in die nach oben gerichtete Einlaßöffnung 50 des Häckselgehäuses 48 geleitet werden kann. Der Austrag des Häckselgutes aus der Häckselvorrichtung 40 erfolgt nach hinten, und zwar in horizontaler Richtung. Hierzu befindet sich am Austragende der Häckselvorrichtung 48 eine Leitvorrichtung 54, die beispielsweise so ausgebildet sein kann, daß das Häckselgut in einem schmalen bzw. breiten Schwad auf den Boden abgelegt wird.

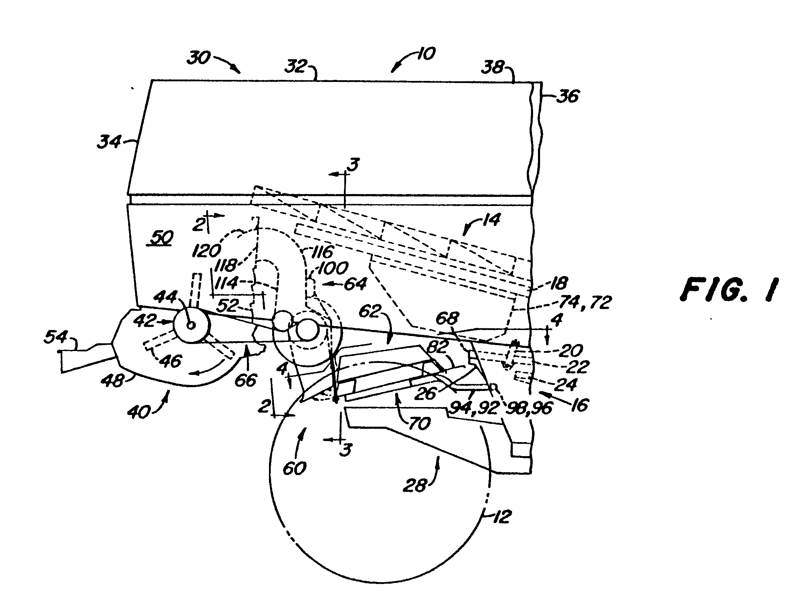

Wie insbesondere aus Fig. 1 hervorgeht, befindet sich unterhalb des Hordenschüttlers 14 eine Fördervorrichtung 60, zu der Kaffbleche 62 gehören, die sich am hinteren, unteren Ende des Kaffsiebes 22 befinden. Der Fördervorrichtung 60 ist ferner ein Gebläseförderer 64 zugeordnet, der sich zwischen den Kaffblechen 62 und der quer verlaufenden Stirnwand 52 erstreckt und über eine Antriebsvorrichtung 66 angetrieben wird. Bei normalen Arbeitselnsätzen bearbeitet und trennt der Mähdrescher das Erntegut in drei Teile auf, wobei ein Teil als gereinigtes Erntegut bzw. Korn in den Sammelbehälter (nicht dargestellt) geht, ein weiterer Teil (Stroh) über das hintere Ende des Hordenschüttlers 14 abgegeben wird und ein dritter Teil, der als Kaffanteil bezeichnet werden kann, über die rückwärtige Kante 68 des Kaffsiebes 22 geleitet wird. Die Aufgabe der Fördereinrichtung 60 besteht darin, den großen Anteil des abgegebenen Kaffs aufzunehmen und es der Einlaßöffnung 50 der Häckselvorrichtung 40 zuzuführen, so daß es mit dem Stroh vermischt werden kann. Beim vorliegenden Ausführungsbeispiel wird der Gebläseförderer 64 zur Weiterleitung des Kaffs durch ein Führungselement unterstützt, zu dem ein Kaffzuführteil 70 sowie gegenüberliegend angeordnete rechte und linke Vorhänge 72 und 74 gehören, die an den Seitenwänden 36 und 38 angeschlossen sind und nach hinten trichterförmig zusammenlaufen.

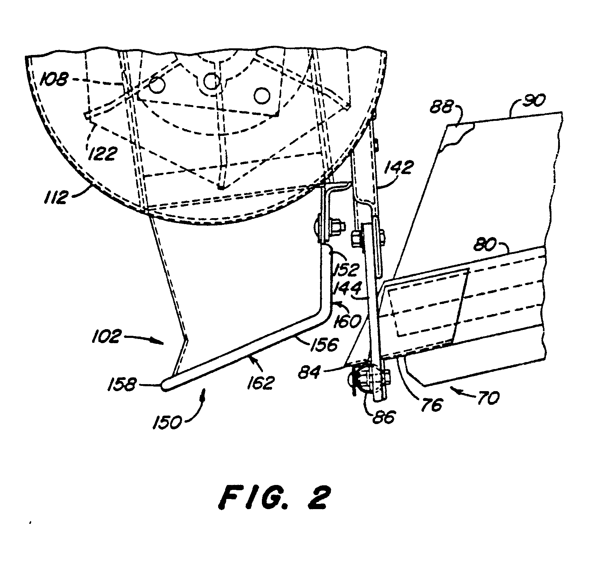

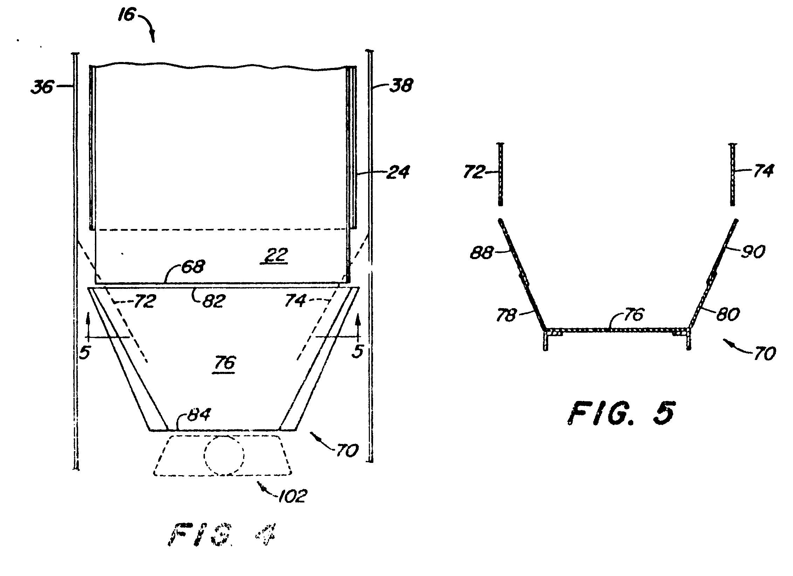

Der Kaffzuführteil 70 (siehe hierzu Fig. 2, 3 und 5) besteht aus einem Boden 76, der sich nach hinten pyramidenstumpfartig verjüngt und der seitlich durch geneigt verlaufende Kanten bzw. Seiten 78 und 80 begrenzt ist. Der Boden 76 weist einen Aufnahmeteil bzw. ein stromaufwärts liegendes Ende 82 auf, das unmittelbar unterhalb des hinteren Endes 68 des Kaffsiebes 22 liegt. Ferner weist der Boden 76 einen Abgabeteil bzw. eine stromabwärts liegende Auslaßöffnung 84 auf, die durch eine untere quer verlaufende Strebe 86 verstärkt ist. Die Strebe 86 erstreckt sich ber den Abgabeteil 84 hinaus. Der Boden 76 des Kaffzuführteiles 70 ist aus einer stabilen Konstruktion, beispielsweise aus einem Metallblech, hergestellt. Die beiden außen liegenden Kanten 78 und 80 erstrecken sich von dem Boden 76 schräg nach außen und oben. Die Kanten 78 und 80 können dabei flexibel ausgebildet sein. An die jeweils obere Kante 78 und 80 schließt sich jeweils ein Verlängerungsteil 88 und 90 an, die dazu beitragen, daß das Kaff auf dem Boden 76 zusammengeführt wird. Die Verlängerungsteile 88 und 90 nehmen normalerweise die in Fig. 5 dargestellte Lage ein und verlaufen in der gleichen schrägen Ebene wie die Kanten 78 und 80. Sie sind ebenfalls flexibel ausgebildet, so daß sie von der Bedienungsperson entsprechend auseinandergebogen werden können, wenn Arbeiten am Rücklaufboden 18 notwendig sind.

Das vordere Ende des Bodens 76 ist mit dem Rahmen 26 der Reinigungsvorrichtung über linke und rechte Tragarme 92 und 94 gelenkig verbunden. Die Tragarme 92 und 94 sind hierzu über Gelenke 96 und 98 (siehe Fig. 1) an dem Rahmen 26 schwenkbar angeschlossen. Somit ist es möglich, daß das Ende bzw. der Aufnahmeteil 82 des Bodens 76 sich mit dem Kaffsieb 22 mitbewegen kann und somit in etwa den gleichen Abstand zu dem Kaffsieb beibehält. Die Gelenke 96 und 98 zum Anschluß der Tragarme 92 und 94 an den Rahmen 26 sind so ausgebildet, daß ein Schnellanschluß bzw. -anbau des Kaffzuführteiles 70 möglich ist. Ferner ist es möglich, nach Lösen der Gelenke 96 und 98 das vordere Ende des Kaffzuführteiles abzusenken, um der Bedienungsperson bei Wartungsarbeiten einen besseren Zugang zur Reinigungsvorrichtung 16 zu schaffen.

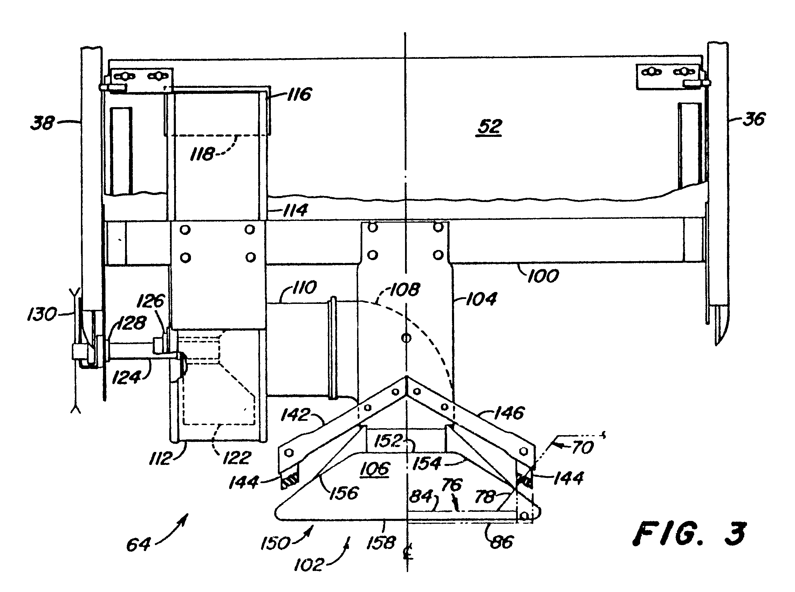

Der Gebläseförderer 64 wird von einer quer verlaufenden Tragvorrichtung 100 aufgenommen, die als Querstrebe ausgebildet sein kann und sich innerhalb der Haube 30 über die gesamte Breite der Haube erstreckt. Eine Einlaßöffnung 102 des Gebläseförderers 64 ist mittig abgestützt, und zwar hinter und oberhalb des Abgabeteiles 84. Zur Abstützvorrichtung gehört eine Tragvorrichtung 104 (siehe Fig. 3), die mit ihrem oberen Ende an die Tragvorrichtung 100 und mit ihrem unteren Ende an die Einlaßöffnung 102 angeschlossen ist. Die Einlaßöffnung 102 besteht aus einem Krümmer 108 und einem unteren Einlaßstutzen 106, der an das untere Ende des Krümmers 108 angeschlossen ist. Das obere Ende des Krümmers 108 ist mit einem horizontal verlaufenden Stutzen 110 verbunden, der an die Einlaßöffnung eines Gebläsegehäuses 112 angeschlossen ist. Das Gebläsegehäuse 112 weist einen Auslaßstutzen 114 auf (siehe Fig. 3), der aus einem Krümmer 116 (siehe Fig. 1) gebildet ist, der an die Stirnwand 52 angeschlossen ist und somit das Gebläsegehäuse 112 abstützt. Der Auslaßkrümmer 116 ist endseitig mit einer Auslaßöffnung 118 versehen, die in der Wand 52 vorgesehen ist. An die Auslaßöffnung 118 schließt sich ein Leitelement 120 an, das dazu dient, das abgegebene Kaff der Häckseltrommel 42 zuzuführen. In dem Gebläsegehäuse 112 befindet sich ein Gebläserad 122, das auf einer horizontal und quer verlaufenden Welle 124 angeordnet ist, die mittels Lagern 126 und 128 im Seitenteil des Gebläsegehäuses 112 und der Seitenwand 38 gelagert ist. Am äußeren Ende der Welle 124 befindet sich eine Zugmittelscheibe 130, die Teil der Antriebsvorrichtung 66 ist. Im Arbeitseinsatz wird über den Stutzen 110 Luft angegaugt und über den Auslaßstutzen 114 abgegeben. Das Gebläserad 122 ist somit in dem Einlaßstutzen wichtig für die Luftförderung.

Das hintere Ende des Kaffzuführteiles 70 ist mittels linker und rechter Streben 146 und 142 an die Tragvorrichtung 104 angeschlossen, wobei die Lenker mit Bezug auf ihre Anschlußstelle an der Tragvorrichtung auseinanderlaufen. An den äußeren Enden der Streben 146, 142 sind flexible Verbindungsstreben 144 mittels Bolzen befestigt. Die Verbindungsstreben 144 können gelenkig mit den Streben 140, 142 verbunden und aus einem elastischen Material hergestellt sein. Sie erstrecken sich von den Streben 140, 142 nach unten und sind mit den gegenüberliegenden Enden der Strebe 86 verbunden, um den Kaffzuführteil 70 zu verstärken. Somit ist es möglich, daß während des Arbeitseinsatzes der Kaffzuführteil 70 infolge der Gelenkverbindung mit dem Rahmen 26 der Reinigungsvorrichtung 16 und den Verbindungsstreben 144 mit dem Kaffsieb 22 entsprechend schwingt.

Wie insbesondere aus Fig. 2 und 3 hervorgeht, ist der Einlaßstutzen 106 mit einem trichterförmig bzw. trapezförmig verlaufenden Einlaßteil 150 ausgerüstet, der aus einer Stirnseite 152 und divergierend verlaufenden linken und rechten oberen und unteren Seitenteilen 154, 156 sowie einer Stirnfläche 158 gebildet ist. Um den Förderwirkungsgrad des Gutes auf den Boden 76 des Kaffzuführteiles 70 zu Verbessern, ist der Einlaßteil 150 des Einlaßkanals 102 nach vorne und unten gerichtet, wobei die Einlaßöffnung aus einem in etwa vertikal verlaufenden Teil 160 sowie einem geneigt und in etwa horizontal verlaufenden, sich daran anschließenden Teil 162 gebildet wird (siehe Fig. 2). Der Abgabeteil 84 des Bodens 76 ist wesentlich schmaler als die größte Breite der Stirnfläche 158 des Einlaßteiles 150 (siehe Fig. 3), so daß das Gut von dem Boden 76 zur Mitte der Einlaßöffnung des Einlaßstutzens 106 zusammengeführt wird und dann durch den Luftstrom aufgenommen wird, so daß das in dem Luftstrom enthaltene Gut ohne weiteres umgelenkt werden kann und nach oben in den Einlaßstutzen 106 eintritt.

Im Arbeitseinsatz wird der größte Teil des Kaffs von dem Kaffsieb 22 und dem unteren Sieb 24 der Reinigungsvorrichtung 16 auch mittels des Gebläseförderers 64 aufgesaugt. Das heißt auch, daß die über das Kaffsieb abgegebenen größeren, schwereren Teile, die infolge der Schwerkraft über das Ende 68 geleitet werden und normalerweise nach unten fallen, ebenso über den Gebläseförderer 64 aufgenommen werden wie das in dem Luftstrom befindliche Gut, der über die Siebe 22, 24 geleitet wird. Die beiden Vorhänge 72 und 74 beiderseits der Kante 78 und 80 und der Verlängerungsteile 88 und 90 führen das Gut bzw. das Kaff zusammen, wenn es infolge der Schwingbewegung der Siebe nach hinten bewegt wird. Der Transport des Kaffs über die Siebe wird über einen in der Zeichnung nicht dargestellten Gebläseförderer unterstützt. Das auf den Sieben befindliche Gut bzw. Kaff wird direkt in den Einlaßstutzen 106 gefördert, wobei die Geschwindigkeit der Luftströmung, die durch das Gebläserad 122 erzeugt wird, ausreichend groß ist, um das Gut in den Einlaßstutzen 106 zu bewegen, das aus leichten und auch etwas schwereren Materialien bestehen kann.

Wie aus Fig. 2 hervorgeht, gestattet der Abstand zwischen der Einlaßöffnung 102 und dem hinteren Abgabeteil 84 des Kaffzuführteiles 70 in Verbindung mit der höher gelegenen Stirnseite 152 der Einlaßöffnung, daß größere Teile, beispielsweise Steine, am Abgabeende der Siebe nach unten fallen und somit nicht in den Gebläseförderer 64 gelangen. Die Ausbildung des Einlaßstutzens 106 bzw. der Stirnseite 160 schafft einen ausreichenden vertikalen Abstand, so daß der Boden 76 das Gut, insbesondere die Kaffteile, ohne weiteres in den Einlaßstutzen 106 leitet. Das im Luftstrom bewegte Erntegut wird normalerweise durch die untere Kante des Hordenschüttlers 14 und die Seitenwände 36 und 38 und zum Teil durch die quer verlaufende Wand 52 begrenzt, so daß ein Teil des in dem Luftstrom bewegten Erntegutes bzw. Kaffs entweder über die Wand 52 wandert, um dann der Häckseltrommel 42 aufgegeben zu werden, oder unterhalb des Gebläseförderers der Einlaßöffnung 102 zugeführt wird, umdann in den Einlaßstutzen gesaugt zu werden.

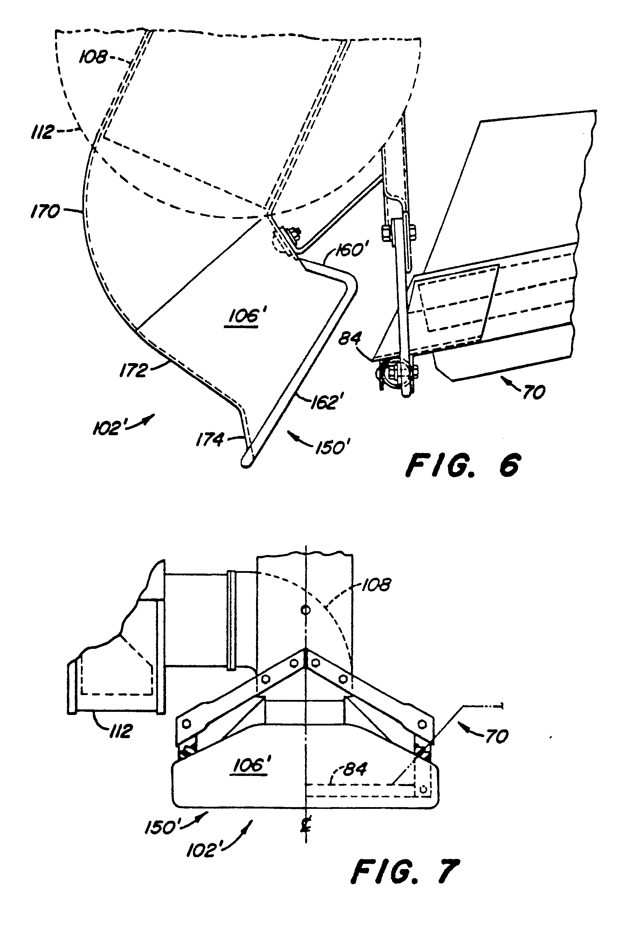

Der Wirkungsgrad des Austrages der Kaffanteile aus der Reinigungsvorrichtung kann durch eine andere Ausbildung des Einlaßstutzens 106' gemäß Fig. 6 und 7 verbessert werden. Der Einlaßteil 150' hat dabei im wesentlichen die gleiche Formgebung wie der Einlaßteil 150 gemäß Fig. 2. Jedoch verläuft die Ebene, die durch den Teil 162' gebildet wird, wesentlich steiler als der Teil 162 gemäß Fig. 2. Das heißt, der Winkel zwischen dem Teil 162' und einer Vertikalebene ist kleiner als der Winkel zwischen dem Teil 162 und einer Vertikalebene. Aufgrund der Anordnung des Teils 162' erfolgt auch eine geringere Umlenkung des aus dem Kaffzuführteil 70 ausgetragenen Gutes. Der obere Teil 160' des Einlaßstutzens 106' ist mit Bezug auf die Standfläche des Mähdreschers geringfügig ansteigend geneigt, so daß ein Teil des Kaffs unter dem Einfluß der Schwerkraft von oben her in den Einlaßstutzen 106' eintreten kann. Der Eintritt des Kaffs in den Einlaßstutzen 106' wird durch den Luftsog unterstützt. Um eine gute Strömung der Luft im Einlaßstutzen 106' aufrechtzuerhalten, ist der Krümmer 108 etwas nach hinten gedreht, wobei ein relativ kurzes Krümmerteil 170 zwischen dem Krümmer 108 und einer Wand 172 des Einlaßstutzens 106' eingesetzt ist. Hierdurch verläuft die Wand 172 wesentlich flacher. Die Lage und die Formgebung des Einlaßstutzens 106' und der relativ fläche Verlauf der Wand 172 Vermeiden, daß das Gut auf der Oberfläche sich festsetzt bzw. zurückgehalten wird, insbesondere wenn schwere Materialteile im Luftstrom mitgefördert werden. Hierzu ist im Bereich des Teils 162' die Wand 172 mit einem runden, abgebogenen Teil 174 versehen.

Die Verwendung des Gebläseförderers 64 am Ende der Reinigungsvorrichtung 16 trägt auch zur besseren Trennung der Kaffanteile vom Erntegut bei. Ferner können größere Gegenstände aus dem Luftstrom, bevor sie in den Gebläseförderer eintreten, ausgeschieden werden, da der Einlaßstutzen hierzu einen entsprechenden Abstand zum Ende der Reinigungsvorrichtung 16 aufweist. Die in der Beschreibung und den Zeichnungen erläuterte Häckselvorrichtung 40 wird insbesondere als Strohverteiler eingesetzt und hat die Aufgabe, das abgegebene Stroh bzw. die Kaffteile am Ende des Mähdreschers entsprechend zu verteilen. Darüber hinaus kann diese Vorrichtung auch zur Zerkleinerung der Strohanteile eingesetzt Werden. Die erfindungsgemäße vorrichtung kann auch mit einem Strohverteiler verwendet werden, dessen Schlegel entweder über eine horizontale oder eine vertikale Achse drehen, wobei die einzelnen Schlegel lediglich zur Beförderung des Strohs bzw. der Kaffanteile dienen.

**Patentansprüche**

1. Mähdrescher (10) mit einem Hordenschüttler (14) und einer unterhalb des Hordenschüttlers angeordneten Reinigungsvorrichtung (16), die das Erntegut in einen Stroh-, Kaff- und einen Getreidestrom aufteilen, wobei zumindest ein Teil des Strohund Kaffstromes einem am Ende des Hordenschüttlers (14) vorgesehenen pneumatischen Förderer (64) zugeführt wird, dadurch gekennzeichnet, daß der Einlaßstutzen (106) des Förderers mit siner Einlaßöttnung (102) mit geringem Abstand hinter einem Abgabeteil bzw. der Auslaßöffnung (84) der Reinigungsvorrichtung (16) und der Auslaßstutzen (114) des Förderers mit seiner Auslaßöffnung (118) im Bereich des Abgabeendes des Hordenschüttlers (14) endet und der austretende Luftstrom des pneumatischen Förderers sowie der vom Hordenschüttler (14) austretende Strohstrom einer Verteilervorrichtung, insbesondere einer Häckselvorrichtung (40), zugeführt wird.

2. Mähdrescher nach Anspruch 1, dadurch gekennzeichnet, daß der pneumatische Förderer als Gebläseförderer (64) ausgebildet ist, der durch seine Einlaßöffnung (102) Luft von außen ansaugt und dessen Einlaßöffnung (102) im Bereich eines Abgabeteils (84) bzw. der Auslaßöffnung (84) der Reinigungsvorrichtung (16) zur Abgabe von Kaff vorgesehen ist, so daß zumindest ein Teil des Kaffs mit der Luft angesaugt wird.

3. Mähdrescher nach den Ansprüchen 1 und 2, dadurch gekennzeichnet, daß die Auslaßöffnung (84) der Reinigungsvorrichtung (16) zur Abgabe des Kaffs nach hinten und die Einlaßöffnung (102) des Gebläseförderers (64) nach vorne und unten gerichtet ist und daß die Einlaßöffnung (102) durch eine Stirnseite begrenzt wird, die aus einem oberen in etwa aufrecht stehenden Teil (160) und aus einem sich daran anschließenden unteren, sich nach hinten erstreckenden Teil (162) gebildet ist.

4. Mähdrescher nach den Ansprüchen 1 und 2, dadurch gekennzeichnet, daß die Einlaßöffnung (102) des Gebläseförderers (64) durch eine Stirnseite begrenzt wird, die aus einem oberen nach hinten ansteigenden Teil (160') und einem sich daran anschließenden, sich nach unten und hinten erstreckenden, geneigt verlaufenden unteren Teil (162') gebildet ist.

5. Mähdrescher nach einem oder mehreren der vorherigen Ansprüche, dadurch gekennzeichnet, daß der Kaffzuführteil (70) zur Aufnahme und Weiterleitung des Kaffs einen nach hinten zusammenlaufenden Boden (76) aufweist, der durch die Auslaßöffnung (84) begrenzt wird, die wesentlich schmaler als die Breite des Mähdreschergehäuses ist.

6. Mähdrescher nach Anspruch 5, dadurch gekennzeichnet, daß der Boden (76) zur Aufnahme und zur Zusammenführung des Kaffs durch nach hinten zusammenlaufende Seiten (78, 80) begrenzt ist.

7. Mähdrescher nach Anspruch 6, dadurch gekennzeichnet, daß im Bereich des hinteren Endes der Reinigungsvorrichtung (16) der Boden (76) zur Aufnahme des Kaffs vorgesehen ist und die Einlaßöffnung (102) des Gebläseförderers (64) hinter und etwas oberhalb des stromabwärts liegenden Endes des Bodens (76) angeordnet ist.

8. Mähdrescher nach einem oder mehreren der vorherigen Ansprüche, dadurch gekennzeichnet, daß der Boden (76) und die Siebe (22, 24) der Reinigungsvorrichtung (16) an Lenkern (20) gemeinsam schwingend gelagert sind.

9. Mähdrescher nach einem oder mehreren der vorherigen Ansprüche, dadurch gekennzeichnet, daß der Boden (76) zur Aufnahme und zur Zusammenführung des Kaffs zumindest teilweise von dem Gebläseförderer (64) getragen wird.

10. Mähdrescher nach einem oder mehreren der vorherigen Ansprüche, dadurch gekennzeichnet, daß der Auslaßstutzen (114) des Gebläseförderers (64) sich nach oben erstreckt und an eine in etwa aufrecht stehende, quer verlaufende Wand (52) angeschlossen ist, die zwischen den Seitenwänden des Mähdreschers (10) vorgesehen ist.

11. Mähdrescher nach Anspruch 10, dadurch gekennzeichnet, daß der Gebläseförderer (64) einen Auslaßkrümmer (116) aufweist, der sich nach unten und durch die quer verlaufende Wand (52) erstreckt, wobei das Abgabeende des Hordenschüttlers oberhalb und im Bereich der Auslaßöffnung (118) des Gebläseförderers (64) enden kann.

12. Mähdrescher nach einem oder mehreren der vorherigen Ansprüche, dadurch gekennzeichnet, daß der Gebläseförderer (64) zumindest ein Gebläserad (122) aufweist, das derart angeordnet ist, daß das aus der Auslaßöffnung der Reinigungsvorrichtung (16) abgegebene Kaff und/oder Stroh von dem Gebläserad (122) gemeinsam aufgenommen und der Strohverteilervorrichtung zugeführt wird.

13. Mähdrescher nach einem oder mehreren der vorherigen Ansprüche, dadurch gekennzeichnet, daß die Strohverteilervorrichtung zahlreiche Schlegel oder Schneidwerksorgane (46) aufweist, die das Stroh und das Kaff aufnehmen, vermischen und verteilen.

14. Mähdrescher nach einem oder mehreren der vorherigen Ansprüche, dadurch gekennzeichnet, daß die Strohverteilervorrichtung eine quer zur Arbeitsrichtung des Mähdreschers verlaufende Achse aufweist.

15. Mähdrescher nach einem oder mehreren der vorherigen Ansprüche, dadurch gekennzeichnet, daß das Gebläserad (122) eine quer zur Arbeitsrichtung des Mähdreschers (10) verlaufende Achse aufweist.

16. Mähdrescher nach einem oder mehreren der vorherigen Ansprüche, dadurch gekennzeichnet, daß die Einlaßöffnung (102) des Gebläseförderers (64) mit Abstand zum hinteren Ende von Sieben (22, 24) der Reinigungsvorrichtung (16) angeordnet ist und daß der Kaffzuführteil (70) mit einem Boden (76) zwischen den Sieben und der Einlaßöffnung (102) zur Aufnahme mindestens eines Teils des Kaffs vorgesehen ist, das zu dem Gebläseförderer (64) weitergeleitet wird.

## Claims

1. Combine harvester (10) with a hurdle shaker (14) and a cleaning device (16) arranged below the hurdle shaker, which divide the harvested material into straw, chaff and grain streams, wherein at least a part of the straw and chaff stream is fed to a pneumatic conveyor (64) providedend at the end of the hurdle shaker (14), characterized in that the inlet pipe (106) of the conveyor ends with its inlet opening (102) spaced a small amount behind a discharge part or the outlet opening (84) of the cleaning device (16) and the outlet pipe (114) of the conveyor ends with its outlet opening (118) in the region of the discharge end of the hurdle shaker (14), and the airstream emerging from the pneumatic conveyor as weil as the straw stream emerging from the hurdle shaker (14) are fed to a distributing device, especially a chopper device (40).

2. Combine harvester according to claim 1, characterized in that the pneumatic conveyor is formed as a blower conveyor (64), which sucks air from outside through its inlet opening (102) and whose inlet opening (102) is provided in the region of a discharge part (84) or the outlet opening (84) of the cleaning device (16) for the discharge of chaff, so that at least a portion of the chaff is sucked in with the air.

3. Combine harvester according to claims 1 and 2, characterized in that the outlet opening (84) of the cleaning device (16) for the discharge op chaff is directed to the rear and the inlet opening (102) of the blower conveyor (64) is directed forwardly and downwards and in that the inlet opening (102) is delimited by a front side, which is formed from an upper, approximately vertically standing part (160) and a lower part (162) connected thereto extending to the rear.

4. Combine harvester according to claims 1 and 2, characterized in that the inlet opening (102) of the blower conveyor (64) is delimited by a front side, which is formed from an upper part (160') rising to the rear and a lower part (162') connected thereto, running inclined, extending downwards and to the rear.

5. Combine harvester according to one or more of the preceding claims, characterized in that the chaff feed part (70) for the reception and further feeding of the chaff has a bottom (76) convering to the rear, which is delimited by an outlet opening (84) which is substantially narrower than the width of the combine harvester housing.

6. Combine harvester according to claim 5, characterized in that the bottom (76) for the reception and for the further feeding of the chaff is delimited by rearwardly convering sides (78, 80).

7. Combine harvester according to claim 6, characterized in that the bottom (76) for the reception of the chaff is provided in the region of the rear end of the cleaning device (16) and the inlet opening (102) of the blower conveyor (64) is arranged behind and somewhat above the downstream lying end of the bottom (76).

8. Combine harvester according to one or more of the preceding claims, characterized in that the bottom (76) and the sleve (22, 24) of the cleaning device (16) are mounted swinging in common on links (20).

9. Combine harvester according to one or more of the preceding claims, characterized in that the bottom (76) for the reception and for the further feeding of the chaff is at least partially carried by the blower conveyor (64).

10. Combine harvester according to one or more of the preceding claims, characterized in that the outlet pipe (114) op the blower conveyor (64) extends upwards and is connected to an approximately vertically standing, transversely running wall (52), which is provided between the side walls of the combine harvester (10).

11. Combine harvester according to claim 10, characterized in that the blower conveyor (64) has an outlet bend (116) which extends downwards and through the transversely running wall (52), wherein the discharge end of the hurdle shaker can end above and in the region of the outlet opening (118) of the blower conveyor (64).

12. Combine harvester according to one or more of the preceding claims, characterized in that the blower conveyor (64) has at least one blower wheel (122), which is so arranged that the chaff discharged from the outlet opening of the cleaning device (16) and/or straw are received together by the blower wheel (122) and fed to the straw distributing device.

13. Combine harvester according to one or more of the preceding claims, characterized in that the straw distributing device has numerous flails or cutting members (46), which receive, mix and distribute the straw and the chaff.

14. Combine harvester according to one or more of the preceding claims, characterized in that the straw distributing device has an axis running transverse to the working direction of the combine harvester.

15. Combine harvester according to one or more of the preceding claims, characterized in that the blower wheel (122) has an axis running transverse to the working direction of the combine harvester (10).

16. Combine harvester according to one or more of the preceding claims, characterized in that the inlet opening (102) of the blower conveyor (64) is arranged spaced from the rear end of sieves (22, 24) of the cleaning device (16) and in that the chaff feed part (70) is provided with a bottom (76) between the sieves and the inlet opening (102) for the reception of at least a part of the chaff, which is further conveyed to the blower conveyor (64).


**Revendications**

1. Moissonneuse-batteuse (10) comportant un secoueur à tables multiples (14) et un dispositif de nettoyage (16) placé au-dessous du secoueur à tables multiples, qui sépare les produits de récolte en un courant de paille et de balles et un courant de grains, une partie au moins du courant de paille et de balles étant amenée à un transporteur pneumatique (64) prévu à l'extrémité du secoueur à tables multiples (14), caractérisée en ce que la tubulure d'entrée (106) du transporteur se termine avec son ouverture d'entrée (102) à une faible distance derrière une section de décharge ou l'ouverture de sortie (84) du dispositif de nettoyage (16) et la tubulure de sortie (114) du transporteur avec son ouverture de sortie (118) au voisinage de l'extrémité de décharge du secoueur à tables multiples (14), et en ce que le courant d'air sortant du transporteur pneumatique, ainsi que le courant de paille sortant du secoueur à tables multiples (14), sont amenés à un dispositif éparpilleur, en particulier un hacheur (40).

2. Moissonneuse-batteuse suivant la revendication 1, caractérisée en ce que le transporteur pneumatique se présente sous forme d'un transporteur à ventilateur (64) qui aspire de l'air de l'extérieur par son ouverture d'entrée (102) et dont l'ouverture d'entrée (102) est prévue au voisinage d'une section de décharge (84) ou de l'ouverture de sortie (84) du dispositif de nettoyage (16) pour décharger des balles, de sorte qu'au moins une partie des balles est aspirée avec l'air.

3. Moissonneuse-batteuse suivant les revendications 1 et 2, caractérisée en ce que l'ouverture de sortie (84) du dispositif de nettoyage (16) est, pour décharger les balles, dirigée vers l'arrière et l'ouverture d'entrée (102) du transporteur à ventilateur (64) vers l'avant et vers le bas, et en ce que l'ouverture d'entrée (102) est délimitée par une face frontale qui est formée par une partie supérieure (160) sensiblement verticale et une partie (162) inférieure dirigée vers l'arrière qui s'y raccorde.

4. Moissonneuse-batteuse suivant les revendications 1 et 2, caractérisée en ce que l'ouverture d'entrée (102) du transporteur à ventilateur (64) est délimitée par une face frontale qui est formée par une partie supérieure (160') montant vers l'arrière et une partie inférieure (162') de direction inclinée, s'étendant vers le bas et vers l'arrière, qui s'y raccorde.

5. Moissonneuse-batteuse suivant une ou plusieurs des revendications précédentes, caractérisée en ce que la section d'amenée de balles (70) comporte, pour recevoir et acheminer les balles, un fond (76) convergeant vers l'arrière qui est délimité par une ouverture de sortie (84) qui est beaucoup plus étroite que la largeur de carter de la moissonneuse-batteuse.

6. Moissonneuse-batteuse suivant la revendication 5, caractérisée en ce que le fond (76) est, pour recevoir et rassembler les balles, délimité par des côtés (78, 80) convergeant vers l'arrière.

7. Moissonneuse-batteuse suivant la revendication 6, caractérisée en ce qu'au voisinage de l'extrémité postérieure du dispositif de nettoyage (16), est prévu le fond (76) pour la réception des balles, et en ce que l'ouverture d'entrée (102) du transporteur à ventilateur (64) se trouve derrière et un peu au-dessus de l'extrémité aval du fond (76).

8. Moissonneuse-batteuse suivant une ou plusieurs des revendications précédentes, caractérisée en ce que la fond (76) et les tamis (22, 24) du dispositif de nettoyage (16) sont montés de façon à osciller ensemble sur des biellettes (20).

9. Moissonneuse-batteuse suivant une ou plusieurs des revendications précédentes, caractérisée en ce que le fond (76) est, pour recevoir et ras sembler les balles, supporté au moins partiellement par le transporteur à ventilateur (64).

10. Moissonneuse-batteuse suivant une ou plusieurs des revendications précédentes, caractérisée en ce la tubulure de sortie (114) du transporteur à ventilateur (64) s'étend vers le haut et se raccorde à une paroi sensiblement verticale (52) dirigée transversalement qui est prévue entre les parois latérales de la moissonneuse-batteuse (10).

11. Moissonneuse-batteuse suivant la revendication 10, caractérisée en ce que le transporteur à ventilateur (64) comporte un coude de sortie (116) qui s'étend vers le bas et à travers la paroi transversale (52), l'extrémité de décharge du secoueur à tables multiples pouvant s'achever au-dessus et au voisinage de l'ouverture de sortie (118) du transporteur à ventilateur (64).

12. Moissonneuse-batteuse suivant une ou plusieurs des revendications précédentes, caractérisée en ce que le transporteur à ventilateur (64) comporte au moins une roue de ventilateur (122) disposée de façon que les balles et/ou la paille déchargées par l'ouverture de sortie du dispositif de nettoyage (16) soient reçues ensemble par la roue de ventilateur (122) et amenées au dispositif éparpilleur de paille.

13. Moissonneuse-batteuse suivant une ou plusieurs des revendications précédentes, caractérisée en ce que l'éparpilleur de paille comporte de nombreux fléaux ou organes de coupe (46) qui reçoivent, mélangent et éparpillent la paille et les balles.

14. Moissonneuse-batteuse suivant une ou plusieurs des revendications précédentes, caractérisée en ce que l'éparpilleur de paille comporte un axe dirigé transversalement à la direction de travail de la moissonneuse-batteuse.

15. Moissonneuse-batteuse suivant une ou plusieurs des revendications précédentes, caractérisée en ce que la roue de ventilateur (122) comporte un axe s'étendant transversalement à la direction de travail de la moissonneuse-batteuse (10).

16. Moissonneuse-batteuse suivant une ou plusieurs des revendications précédentes, caractérisée en ce que l'ouverture d'entrée (102) du transporteur à ventilateur (64) est disposée à distance de l'extrémité arrière de tamis (22, 24) du dispositif de nettoyage (16), et en ce que la section d'amenée de balles (70) est prévue avec un fond (76) entre les tamis et l'ouverture d'entrée (102) pour la réception d'au moins une partie des balles, qui sont acheminées vers le transporteur à ventilateur (64).

*FIG. I*

EP 0 181 500 B1

FIG. 2

FIG. 3

FIG. 5

FIG. 4

FIG. 6

FIG. 7